# EUROPÄISCHE PATENTSCHRIFT

(11) **EP 2 905 268 B1**
(45) Veröffentlichungstag und Bekanntmachung des Hinweises auf die Patenterteilung: **03.01.2018**
(21) Anmeldenummer: 14191382.2
(22) Anmeldetag: 02.11.2011
(51) Int. Cl.: C04B 26/02, C04B 28/24, C04B 28/26, C04B 41/00, C04B 111/00

(54) **Zusammensetzung zur Behandlung gipsverspachtelter, gipsabgezogener oder gipsverputzter Areale und deren Verwendung zur Behandlung gipsverspachtelter, gipsabgezogener oder gipsverputzter Areale**
Compound for treating plaster filled, removed or covered areas and its use for treating plaster filled, removed or covered areas
Composition destinée au traitement de zones emplâtrées, de zones dont le plâtre est retiré ou de zones plâtrées et son utilisation pour le traitement de telles zones

(43) Veröffentlichungstag der Anmeldung: 12.08.2015
(62) Teilanmeldung aus: 11008741.8
(73) Patentinhaber: DAW SE, 64372 Ober-Ramstadt (DE)
(72) Erfinder: Befurt, Uwe, 64372 Ober-Ramstadt (DE); Walter, Christian, 64846 Gross-Zimmern (DE); Brenner, Thomas, 64367 Mühltal (DE)
(74) Vertreter: Metten, Karl-Heinz

(56) Entgegenhaltungen:
- EP-B1- 1 937 891
- Anonymous: "Product Overview - Polymer dispersions for Architectural Coatings", European Patent Register , 2. März 2011 (2011-03-02), Seiten 1-6, XP002735854, Gefunden im Internet: URL:https://register.epo.org/application?d ocumentId=EVUOV2837407235&appnumber=EP1100 8741&showPdfPage=all
- BASF: "Acronal S559 - Technical Datasheet", , 31. Dezember 2010 (2010-12-31), XP002735856, Gefunden im Internet: URL:http://coatings.specialchem.com/produc t/r-basf-acronal-s-559-for-europe-only [gefunden am 2015-02-12]
- Anonymous: "Betolin A11 - Sicherheitsdatenblatt", European Patent Register , 7. Februar 2011 (2011-02-07), XP002735857, Gefunden im Internet: URL:https://register.epo.org/application?d ocumentId=EVUOV29L6183235&appnumber=EP1100 8741&showPdfPage=all
- FIRMA WOELLNER SILIKAT: "Richtrezeptur E-F3", TECHNICAL DATA SHEET, 1 September 1999 (1999-09-01),

## Beschreibung

Die vorliegende Erfindung betrifft eine Grundierung, eine Farbe und einen Putzmörtel zur Behandlung gipsverspachtelter, gipsabgezogener oder gipsverputzter Areale sowie ein Verfahren zur Herstellung einer Grundierung, einer Farbe und eines Putzmörtels. Aus dem Trockenbau ist die Verspachtelung von Fugen benachbarter Gipsplatten mit Gips hinlänglich bekannt und wird schon seit sehr langer Zeit eingesetzt, um eine glatte, ebene Oberfläche zu erhalten, welche zum Beispiel mit einer Grundierung, einem Putz, einer Farbe, einem Vlies, z.B. einem Glasvlies oder einer Tapete versehen werden kann. Bei solchen gipsverspachtelten Arealen, beispielsweise bei sogenannten Q1-, Q2- und Q3-Verspachtelungen, insbesondere Q3-Verspachtelungen, kann es nach dem Aufbringen von nachfolgenden Beschichtungen mitunter aufgrund von Blasenbildung oder einer Kräuselung der Oberfläche zu einer schlechten Haftung an der Unterlage oder sogar zu einem Abplatzen kommen. Dieses Phänomen wird zum Beispiel insbesondere bei scharf abgezogenen Fugenbereichen beobachtet, bei denen die aufgetragene Gipsschicht eine geringe Dicke von z.B. weniger als 500 µm aufweist. Hierfür soll eine unvollständige Umsetzung des Hemihydrats zum Calciumsulfatdoppelhydrat verantwortlich sein. Das vorangehend geschilderte Problem ist schon seit Jahrzehnten bekannt. Eine zufriedenstellende Lösung ist bislang nicht gefunden worden. Zwischenzeitlich hatte man Carboxymethylcelluloseether (CMC) für die beobachteten Kräuselungen und Blasenbildungen verantwortlich gemacht. Allerdings lassen sich auch bei Verwendung CMC-freier Systeme die genannten Beanstandungen nicht abstellen.

In der EP 1 937 891 A2 wird die kombinierte Verwendung von Stärke bzw. Stärkederivaten zusammen mit mindestens einer hochviskosen Cellulose als Verdicker in dispersionsbindemittelbasierenden Farbsystemen offenbart. Hierbei hat die Cellulose eine Viskosität > 50.000 mPa.s, gemessen mittels Brookfield-Rotationsviskosimeter als 2 %-ige gequollene wässrige Lösung bei 5 Upm und 25 °C, aufzuweisen. Durch diese kombinierte Verwendung sollen Verdickungsmittel auf Stärkebasis für den Einsatz in Dispersionsfarben für den praktischen Einsatz in Frage kommen. In diesem Zusammenhang wird in diesem Dokument ein Silikat-Reibeputz offenbart mit einem Bindemittelfeststoffanteil von etwa 4,25 Gew-% und einem Wasserglasfeststoffanteil von 2,03 Gew-%.

Ferner war dem Fachmann die Richtrezeptur E-F3 einer als Streichgrund zu verwendenden Egalisierfarbe (Woellner Silikat) bekannt. Diese enthielt 29,0 Gew-% Wasser, 0,2 Gew-% Betolin V 30, 0,3 Gew-% Sapetin D 20, 0,5 Gew-% Betolin Quart 25, 5,0 Gew-% Bayertitan R-KB 5, 10,0 Gew-% Durcal 5, 25,0 Gew-% Quarzmehl, 7,5 Gew-% Plastorit 000, 15,0 Gew-% Acronal 290 D, 1,5 Gew-% Testbenzin, 5,0 Gew-% Betolin P 50 und 1,0 Gew-% Betolin A 11.

Demzufolge lag der vorliegenden Erfindung die Aufgabe zugrunde, die Haftungsprobleme im Zusammenhang mit gipsverspachtelten, gipsabgezogenen oder gipsverputzten Arealen zu beheben sowie Grundierungen, Farben und Putzmörtel zur Verfügung zu stellen, die auch auf solchen gipsverspachtelten, gipsabgezogenen oder gipsverputzten Arealen, bei denen sich der Gips schlecht bzw. nur unvollständig umgesetzt hat, Blasenbildung bzw. Kräuselung nicht zulassen und insbesondere eine gute Haftung garantieren, so dass ein sich anschließender Farb-, Grundierungs- oder Putzauftrag nicht zu Beanstandungen führt.

Demgemäß wurden eine Grundierung, eine Farbe und ein Putzmörtel zur Behandlung gipsverspachtelter, gipsabgezogener oder gipsverputzter Areale gemäß den Merkmalen des Patentanspruchs 1 gefunden.

Wasserglas ist besonders bevorzugt. Dieses liegt in den erfindungsgemäßen Grundierungen, Farben und Putzmörtel vorzugsweise nicht kolloidal vor. Die erfindungsgemäßen Wasser enthaltenden Grundierungen, Farben und Putzmörtel sind basisch und verfügen besonders bevorzugt über einen pH von größer oder gleich 9,5.

Gips im Sinne der vorliegenden Erfindung umfasst reinen Gips ebenso wie Gips, enthaltend ein Bindemittel bzw. Co-Bindemittel, beispielsweise Vinylacetat, und/oder einen Verzögerer, beispielsweise Weinsäure. Grundsätzlich kommen alle kommerziell erhältlichen Gipsformulierungen in Betracht. Bei einem gipsverspachtelten, gipsabgezogenen oder gipsverputzten Areal im Sinne der vorliegenden Erfindung handelt es sich um eine dreidimensionale Struktur, beispielsweise in Form einer Schicht oder Beschichtung, wie sie u.a. auch von Grundierungen, Putzen oder Farben bekannt ist.

Bevorzugt ist der pH-Wert der erfindungsgemäßen Grundierungen, Farben und Putzmörtel größer oder gleich 9,5, vorzugsweise größer oder gleich 10,5 und besonders bevorzugt größer oder gleich 11,0.

Bei dem eingesetzten Wasserglas handelt es sich um in Wasser lösliches bzw. gelöstes Wasserglas. Die wässrige Lösung wird auch als flüssiges Wasserglas bezeichnet. Vorzugsweise wird hierbei auf Natriumwasserglas, Lithiumwasserglas und/oder Kaliumwasserglas zurückgegriffen, wobei es häufig zweckmäßig ist, Kaliutnwasserglas zu verwenden. Für die erfindungsgemäßen Grundierungen, Farben und Putzmörtel wird häufig auf eine 15 bis 40 gew.-%ige, insbesondere 20 bis 35 gew.-%ige wässrige Wasserglaslösung zurückgegriffen. In einer zweckmäßigen Ausgestaltung kann auf 28 gew.-%ige wässrige Wasserglaslösung, insbesondere eine solche Kaliumwasserglaslösung, zurückgegriffen werden.

Die erfindungsgemäßen Grundierungen, Farben und Putzmörtel enthalten flüssiges Wasserglas in einer Ausgestaltung in einer Menge im Bereich von 0,005 bis 23 Gew.-%, vorzugsweise 0,3 bis 10 Gew.-%.

Gemäß einer zweckmäßigen Ausführungsform liegt in den erfindungsgemäßen Grundierungen, Farben und Putzmörtel der Masseanteil, d.h. der Feststoffanteil, bezogen auf das Gesamtgewicht der Zusammensetzung, an in Wasser gelöstem Silikat, bestehend aus oder umfassend in Wasser gelöstes Wasserglas oder in Wasser gelöstes Wasserglas und Kieselsol, bevorzugt im Bereich von 0,01 bis 3 Gew.-%, besonders bevorzugt im Bereich von 0,05 bis 2,5 Gew,-% und insbesondere im Bereich von 0,1 1 bis 2 Gew.-%.

Es hat sich als besonders vorteilhaft erwiesen, den Anteil an. in Wasser gelöstem Silikat, bestehend aus oder umfassend in Wasser gelöstes Wasserglas oder in Wasser gelöstes Wasserglas und Kieselsol, derart einzustellen, dass dieses in Wasser gelöste Silikat in Form von Wasserglas oder von Wasserglas und Kieselsol in die oberflächennahen und gegebenenfalls auch in oberflächenferne Bereiche dieser Areale eindringt bzw. eindiffundiert, bevor dieses mit den Calciumionen aus dem, insbesondere nicht abgebundenen, verspachtelten, abgezogenen oder verputzten Gips reagiert. D.h. um eine vorteilhafte Penetrationstiefe für das gelöste Silikat in Form von Wasserglas oder von Wasserglas und Kieselsol und die Bildung eines Gips/Silikat-Komposits zu erreichen, sollten die erfindungsgemäßen Grundierungen, Farben und Putzmörtel über eine hinreichend niedrige Konzentration an gelöstem Silikat in Form von Wasserglas oder von Wasserglas und Kieselsol verfügen. Bei zu hoch gewählten Konzentrationen besteht die Gefahr, dass die Reaktion mit den Calciumionen ausschließlich bzw. nahezu ausschließlich an der Gipsoberfläche stattfindet, was zu einem Verschließen der Oberfläche führen kann, mit der Folge, dass Spalte und Poren in diesen

Arealen frühzeitig verblockt werden können, was eine Penetration der in Wasser gelösten Silikate in Form von Wasserglas oder von Wasserglas und Kieselsol, insbesondere des löslichen Wasserglases, in oberflächennahe und insbesondere oberflächenferne Bereiche verhindern würde.

Besonders zweckmäßig ist in diesem Zusammenhang auch, dass der Massenanteil an in Wasser dispergiertem und/oder wasserdispergierbarem organischen Bindemittel, d.h. der organische Feststoffanteil, bezogen auf das Gesamtgewicht der Zusammensetzung, größer ist, insbesondere um mindestens das zwei- oder dreifache größer ist, als der Masseanteil, d.h. der Feststoffanteil, bezogen auf das Gesamtgewicht der Zusammensetzung, an in Wasser gelöstem Silikat, bestehend aus oder umfassend in Wasser gelöstes Wasserglas oder in Wasser gelöstes Wasserglas und Kieselsol.

Eine geeignete Ausführungsform sieht vor, dass der Massenanteil an in Wasser dispergiertem und/oder wasserdispergierbarem organischen Bindemittel im Bereich von 0,002 bis 30 Gew.-%, bevorzugt im Bereich von 0,02 bis 25 Gew.-%, besonders bevorzugt im Bereich von 0,1 bis 20 Gew.-% und insbesondere im Bereich von 0,2 bis 15 Gew.-% liegt.

Bevorzugt wird auch auf solche erfindungsgemäßen Grundierungen, Farben und Putzmörtel zurückgegriffen, bei denen der Masseanteil an in Wasser gelöstem Silikat, bestehend aus oder umfassend in Wasser gelöstes Wasserglas oder in Wasser gelöstes Wasserglas und Kieselsol, im Bereich von 0,1 bis 2 Gew.-% liegt, bei denen der Massenanteil an in Wasser dispergiertem und/oder wasserdispergierbarem organischen Bindemittel im Bereich von 0,2 bis 15 Gew.-% liegt und bei denen der Massenanteil an in Wasser dispergiertem und/oder wasserdispergierbarem organischen Bindemittel größer ist, insbesondere um mindestens das zwei- oder dreifache größer ist, als der Masseanteil an in Wasser gelöstem Silikat, bestehend aus oder umfassend in Wasser gelöstes Wasserglas oder in Wasser gelöstes Wasserglas und Kieselsol.

Das organische Bindemittel umfasst in einer bevorzugten Ausführungsform, insbesondere in wässriger Dispersion vorliegende, vorzugsweise sphärische bzw. kugelförmige, Kunststoffpartikel, insbesondere mit einem durchschnittlichen Durchmesser kleiner 2 µm, besonders bevorzugt kleiner 1 µm, insbesondere enthaltend oder gebildet aus mindestens einem Acrylat-, Styrol-, insbesondere Styrolacrylat-, Vinylacetat-, Vinylpropionat- und/oder Urethanhomo- und/oder -copolymere oder einer beliebigen Mischung hiervon.

Die genannten Kunststoffpartikel bzw. -kugeln weisen in einer besonders zweckmäßigen Ausgestaltung einen durchschnittlichen Durchmesser kleiner 500 nm, insbesondere kleiner 250 nm oder 200 nm, beispielsweise im Bereich von 150 nm, auf. Das organische Bindemittel liegt in einer bevorzugten Ausgestaltung in Form einer Bindemitteldispersion, insbesondere in Form einer Styrolacrylatcopolymerdispersion, vor. Geeignete Polyvinylacetatdispersionen umfassen u.a. solche mit äußerer Weichmachung, z.B. mit Dibutylenhexylenglycol, und auch solche mit innerer Weichmachung. In letzterem Fall liegt das Polyvinylacetat als Copolymerisat vor, beispielsweise mit Vinylestern, Maleinaten, Fumaraten, Acrylaten oder Ethylen, oder als Terpolymerisat mit Ethylen und Vinylchlorid. Geeignete Polyvinylpropionatdispersionen nutzen Polyvinylpropionat z.B. als Homopolymerisat oder als Copolymerisat, beispielsweise mit Acrylaten. In geeigneten Polystyroldispersionen liegt Polystyrol z.B. als Homopolymerisat oder als Copolymerisat vor. Styrolcopolymerisate sind bevorzugt, z.B. solche mit Acrylaten oder Butadien. Besonders bevorzugt sind Styrolacrylatcopolymerisate für den Einsatz als Bindemitteldispersion. Geeignete Polyacrylate können z.B. Homo- wie auch Copolymerisate umfassen. In bevorzugten Copolymerisaten kommt Acrylsäure und/oder Methacrylsäure sowie deren Ester zum Einsatz. Das organische Bindemittel stellt in einer zweckmäßigen Ausführungsform eine 30 bis 75 gew.-%ige, insbesondere 40 bis 65 gew.-%ige, wässrige Dispersion des organischen Bindemittels dar.

Erfindungsgemäße Grundierungen, Farben und Putzmörtel können in einer ersten Ausgestaltung ferner Sand, insbesondere Quarzsand und/oder Quarzmehl, umfassen und können damit eine Grundierung bilden, oder sie umfassen mindestens eine Gesteins- bzw. Putzkörnung, insbesondere auf Basis von Marmor und/oder Dolomit und/oder Silikat, sowie gegebenenfalls ein anorganisches und/oder organisches Fasermaterial und können dann einen sogenannten, insbesondere pastösen, Putzmörtel für den Innen- oder Außenputz bilden. Darüber hinaus können die erfindungsgemäßen Zusammensetzungen bei Anwesenheit von mindestens einem Pigment auch eine Farbe darstellen. Selbstverständlich kann die Grundierung neben Sand auch Putzkörnung enthalten, und der Putzmörtel neben Putzkörnung auch Sand, wie vorangehend spezifiziert.

Erfindungsgemäße Grundierungen, Farben und Putzmörtel können ferner weitere Füllstoffe und/oder Pigmente und/oder Additive umfassen. Geeignete Füllstoffe können zum Beispiel ausgewählt werden aus der Gruppe der Quarzite, Dolomite, Hektorite, Calcite, Silikate, z.B. Schichtsilikate, Vulkanite, Kieselerde und Diatomeenerden. Geeignete Pigmente können beispielsweise ausgewählt werden aus der Gruppe bestehend aus synthetischen und natürlichen anorganischen und/oder organischen Pigmenten. Bevorzugt wird in einer Variante auf Titandioxid zurückgegriffen.

Geeignete Füllstoffe können Calciumcarbonat, Silikate, insbesondere Kaolin und/oder Glimmer und/oder Talke, und/oder deren Mischungen umfassen.

Geeignete Additive können zum Beispiel ausgewählt werden aus der Gruppe bestehend aus Verdickungsmitteln, Entschäumungsmitteln, Netzmitteln, Wachspräparationen, Stabilisatoren oder deren Mischungen.

Gemäß einer weiteren Ausfuhrungsform können erfindungsgemäße Grundierungen, Farben und Putzmörtel ferner mindestens ein organisches oder anorganisches Fasermaterial oder deren Mischungen enthalten. Geeignete anorganische Fasern umfassen z.B. Glasfasern und/oder Mineralfasern, geeignete organische Fasern z.B. Cellulosefasem und/oder Acrylfasem.

Geeignete Verdickungsmittel umfassen Polysaccharide, bevorzugt Celluloseether, Acrylatverdicker, Polyurethanverdicker, natürliche oder synthetische anorganische Verdicker, insbesondere Hektorite, Bentonite und/oder Smektite, modifizierte Stärke, Xanthan, Guar oder beliebige Mischungen hiervon. Besonders bevorzugt wird auf Hydroxyethylcellulose als Verdickungsmittel zurückgegriffen.

Als besonders zweckmäßig hat sich auch die Anwesenheit einer wässrigen Silikonharzlösung, insbesondere enthaltend Kaliumrnethylsiliconat, in den erfindungsgemäßen Zusammensetzungen erwiesen.

Geeignete Wachspräparationen für die erfindungsgemäßen Zusammensetzungen umfassen Polyethylen-, insbesondere HD-Polyethylen-, Paraffin-, Montan-, Carnauba- und Amidwachse oder deren Mischungen.

Mit Hilfe der erfindungsgemäßen Grundierungen, Farben und Putzmörtel erhält man ein oberflächenbehandeltes gipsverspachteltes, gipsabgezogenes oder gipsverputztes Areal, insbesondere mit einer ausgehärteten bzw. abgebundenen Gipsschicht mit einer Unter- und einer Oberseite, wobei die Gipsschicht mindestens im Bereich der Oberseite oder über die gesamte Dicke der Gipsschicht Calciumsilikathydrat enthält, insbesondere eine Kompositlage (d.h. der Gips/Silikat-Komposit) enthaltend Gips und, vorzugsweise darin eingebettetem, Calciumsilikathydrat aufweist bzw. bildet.

Die Kompositlage, d.h. der Gips/Silikat-Komposit, ist integraler Bestandteil der Gipsschicht bzw. bildet diese, falls das lösliche Silikat über die gesamte Dicke der Gipsschicht penetriert. Die durchschnittliche Dicke der Kompositlage entspricht im Allgemeinen der Eindringtiefe des gelösten Silikats in Form von gelöstem Wasserglas oder von gelöstem Wasserglas und Kieselsol. In einer Ausgestaltung kann die Kompositlage eine durchschnittliche Dicke von bis zu 150 µm oder von bis zu 500 µm aufweisen. In der Kompositlage liegt neben Gips regelmäßig Calciumsilikathydrat vor.

Ein Verfahren zur Herstellung eines obertlächenbehandelten gipsverspachtelten, gipsabgezogenen oder gipsverputzte Areals umfasst die Schritte
a) Erstellung eines gipsverspachtelten, gipsabgezogenen oder gipsverputzten Areals, insbesondere umfassend Bereiche mit einer Dicke kleiner etwa 500 µm, auf einem Untergrund,
b) Trocknen des gipsverspachtelten, gipsabgezogenen oder gipsverputzten Areals,
c) Aufbringen einer erfindungsgemäßen Grundierung, einer erfindungsgemäßen Farbe oder eines erfindungsgemäßen Putzmörtels auf das gipsverspachtelte, gipsabgezogene oder gipsverputzten Areal,
d) Trocknen der auf das gipsverspachtelte, gipsabgezogene oder gipsverputzte Areal aufgebrachten Zusammensetzung und
e) gegebenenfalls Aufbringen einer Farbe, einer Tapete, eines Putzes, eines Vlieses oder einer anderweitigen Beschiclatung oder Abdeckung auf das die Zusammensetzung aufweisende gipsverspachtelte, gipsabgezogene oder gipsverputzte Areal.

Die der Erfindung zugrunde liegende Aufgabe wird des Weiteren gelöst durch ein Verfahren zur Herstellung einer erfindungsgemäßen Grundierung, einer erfindungsgemäßen Farbe oder eines erfindungsgemäßen Putzmörtels, umfassend die Schritte
a) Zurverfügungstellung von in Wasser gelöstem Silikat, bestehend aus oder umfassend in Wasser gelöstes Wasserglas oder in Wasser gelöstes Wasserglas und Kieselsol, insbesondere Wasserglas, besonders bevorzugt Kaliumwasserglas, vorzugsweise als 15 bis 40 gew.-%ige, insbesondere 20 bis 35 gew.-%ige, wässrige Lösung von Silikat, bestehend aus oder umfassend in Wasser gelöstes Wasserglas oder in Wasser gelöstes Wasserglas und Kieselsol,
b) Zurverfügungstellung von in Wasser dispergiertem oder dispergierbarem organischen Bindemittel, insbesondere in Form von Kunststoffpartikeln oder-kugeln mit einem durchschnittlichen Durchmesser kleiner 3 µm, vorzugsweise kleiner 2 µm,
c) Vermischen der in Schritt a) und b) erhaltenen Lösung bzw. Dispersion und
d) Einstellen des pH Wertes der Zusammensetzung auf einen basischen Wert, insbesondere größer oder gleich 9,5. Hierbei kann das in Wasser dispergierte Bindemittel z.B. eine 30 bis 75 gew.-%ige, insbesondere 40 bis 60 gew.-%ige, wässrige Bindemitteldispersion darstellen.

Die erfindungsgemäßen Grundierungen, Farben und Putzmörtel eignen sich für die Behandlung gipsverspachtelter, gipsabgezogene oder gipsverputzter Areale. Mit diesen Grundierungen, Farben und Putzmörtel lassen sich insbesondere Ablösungen bei gipsverspachtelten, gipsabgezogenen oder gipsverputzten Arealen verhindern, d.h. nachfolgend aufgebrachte Beschichtungen, z.B. Farbanstriche zeigen stets eine einwandfreie Haftung und eine makellose Oberfläche. Mit den erfindungsgemäßen Grundierungen, Farben und Putzmörtel gelingt demgemäß die Deaktivierung von nicht abgebundenem Gips bei gipsverspachtelten, gipsabgezogenen oder gipsverputzten Arealen, und zwar insbesondere auch bei gerade solchen Arealen mit einer kritischen Dicke unterhalb von 500 µm.

Exemplarische erfindungsgemäße Putzmörtel können gewichtsanteilig wie folgt aufgebaut sein:

### Putzmörtel:

| | |
|---|---|
| Wasser | 10 - 36 Gew.-%, bevorzugt 15 - 25 Gew.-%, |
| Pigment | 0 - 10 Gew.-%, bevorzugt 1,5 - 5 Gew.-%, |
| Füllstoffe | 40 - 89,8 Gew.-%, bevorzugt 46,5 - 81, 8 Gew.-%, |
| Fasern | 0 - 10 Gew.-%, bevorzugt 0,5 - 5 Gew.-%, |
| Wachspräparation | 0 - 10, Gew.-% bevorzugt 0,1 - 5 Gew.-%, |
| Bindetnitteldispersion | 0.1 - 10 Gew.-%, bevorzugt 0,5 - 6 Gew.-%, |
| Wasserglas | 0,1 - 4 Gew.-%, bevorzugt 0,5 - 2,5 Gew.-%, |
| Additiv | 0 - 10 Gew.-%, bevorzugt 0,1 - 5 Gew.-%. |

Erfindungsgemäße Grundierungen und Farben sind gewichtsanteilig wie folgt aufgebaut:

### Grundierung:

| | |
|---|---|
| Wasser | 22 - 40 Gew.-%, |
| Pigment | 1,5 - 5 Gew.-%, |
| Füllstoffe | 27,5 - 74,9 Gew.-%, |
| Wachspräparation | 0,1 - 5 Gew.-%, |
| Bindernitteldispersion | 0,5 - 15 Gew.-%, |
| Wasserglas | 0,5 - 2,5 Gew.-%, |
| Additiv | 0,5 - 5 Gew.-%. |

### Farbe:

| | |
|---|---|
| Wasser | 20 - 70 Gew.-%, |
| Pigment | 1,5 - 12 Gew.-%, |
| Füllstoffe | 27 - 51,5 Gew.-%, |
| Bindemitteldispersion | 0,5 - 10 Gew.-%, |
| Wasserglas | 0,5 - 2,5 Gew.-%, |
| Additiv | 0,5 - 4 Gew.-%. |

Der vorliegenden Erfindung lag die überraschende Erkenntnis zugrunde, dass die mit gipsverspachtelten, gipsabgezogenen und gipsverputzten Arealen bislang einhergehenden Probleme in Bezug auf Ablösung, Blasenbildung bzw. Kräuselung sich durch Behandlung mit erfindungsgemäßen Grundierungen, Farben und Putzmörtel abstellen lassen. Dabei ist als besonderer Vorteil hervorzuheben, dass auch zunächst nur unvollständig abgebundener Gips nicht zu Haftungsproblemen führt, und zwar insbesondere auch nicht in den Bereichen, in denen die aufgetragene Gipsschicht Dicken unterhalb von 500 µm aufweist. Als weiterer Vorteil ist zu nennen, dass die erfindungsgemäßen Putzmörtel, Grundierungen oder Farben nicht über herkömmliche Konservierungsmittel zu verfügen haben, um lagerstabil zu sein.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Grundierung, enthaltend Wasser, zur Behandlung gipsverspachtelter, gipsabgezogener oder gipsverputzter Areale, umfassend
mindestens ein in Wasser gelöstes Silikat, bestehend aus oder umfassend mindestens ein in Wasser gelöstes Wasserglas oder mindestens ein in Wasser gelösten Wasserglas und Kieselsol, und
mindestens ein in Wasser dispergiertes oder dispergierbares organisches Bindemittel,
wobei der pH-Wert dieser Zusammensetzung basisch ist,
wobei der Massenanteil an in Wasser gelöstem Silikat, bestehend aus oder umfassend in Wasser gelöstes Wasserglas oder in Wasser gelöstes Wasserglas und Kieselsol, bezogen auf das Gesamtgewicht der Zusammensetzung, im Bereich von 0,001 bis 3,5 Gew.-% liegt,
wobei der Massenanteil an in Wasser dispergiertem oder dispergierbarem organischen Bindemittel größer ist als der Massenanteil an in Wasser gelöstem Silikat, bestehend aus oder umfassend in Wasser gelöstes Wasserglas oder in Wasser gelöstes Wasserglas und Kieselsol, und
wobei das organische Bindemittel Kunststoffpartikel mit einem durchschnittlichen Durchmesser kleiner 3 µm umfasst,
wobei die Grundierung
22 bis 40 Gew.-% Wasser,
1,5 bis 5 Gew.-% Pigment,
27,5 bis 74,9 Gew.-% Füllstoffe,
0,1 bis 5 Gew.-% Wachspräparation,
0,5 bis 15 Gew.-% Bindemitteldispersion,
0,5 bis 2,5 Gew. -% Wasserglas und
0,5 bis 5 Gew.-% Additiv enthält;
oder
Farbe, enthaltend Wasser, zur Behandlung gipsverspachtelter, gipsabgezogener oder gipsverputzter Areale, umfassend
mindestens ein in Wasser gelöstes Silikat, bestehend aus oder umfassend mindestens ein in Wasser gelöstes Wasserglas oder mindestens ein in Wasser gelösten Wasserglas und Kieselsol,
mindestens ein in Wasser dispergiertes oder dispergierbares organisches Bindemittel und
eine wässrige Silikonharzlösung, enthaltend Kaüummethyisiliconat,
wobei der pH-Wert dieser Zusammensetzung basisch ist,
wobei der Massenanteil an in Wasser gelöstem Silikat, bestehend aus oder umfassend in Wasser gelöstes Wasserglas oder in Wasser gelöstes Wasserglas und Kieselsol, bezogen auf das Gesamtgewicht der Zusammensetzung, im Bereich von 0,001 bis 3,5 Gew.-% liegt,
wobei der Massenanteil an in Wasser dispergiertem oder dispergierbarem organischen Bindemittel größer ist als der Massenanteil an in Wasser gelöstem Silikat, bestehend aus oder umfassend in Wasser gelöstes Wasserglas oder in Wasser gelöstes Wasserglas und Kieselsol, und
wobei das organische Bindemittel Kunststoffpartikel mit einem durchschnittlichen Durchmesser kleiner 3 µm umfasst,
wobei die Farbe
20 - 70 Gew.-% Wasser,
1,5 - 12 Ges.-% Pigment,
27 - 51,5 Gew.-% Füllstoffe,
0,5 - 10 Gew.-% Bindemitteldispersion,
0,5 - 2,5 Gew.-% Wasserglas und
0,5 - 4 Gew.-% Additiv enthält;
oder
Putzmörtel, enthaltend Wasser,
zur Behandlung gipsverspachtelter, gipsabgezogener oder gipsverputzter Areale, umfassend mindestens ein in Wasser gelöstes Silikat, bestehend aus oder umfassend mindestens ein in Wasser gelöstes Wasserglas oder mindestens ein in Wasser gelösten Wasserglas und Kieselsol, und mindestens ein in Wasser dispergiertes oder dispergierbares organisches Bindemittel,
wobei das organische Bindemittel Kunststoffpartikel mit einem durchschnittlichen Durchmesser kleiner 3 µm umfasst und
wobei der pH-Wert dieser Zusammensetzung basisch ist,
wobei der Massenanteil an in Wasser gelöstem Silikat, bestehend aus oder umfassend in Wasser gelöstes Wasserglas oder in Wasser gelöstes Wasserglas und Kieselsol, bezogen auf das Gesamtgewicht der Zusammensetzung, im Bereich von 0,001 bis 2 Gew.-% liegt und
wobei der Massenanteil an in Wasser dispergiertem oder dispergierbarem organischen Bindemittel um mindestens das dreifache größer ist als der Massenanteil an in Wasser gelöstem Silikat, bestehend aus oder umfassend in Wasser gelöstes Wasserglas oder in Wasser gelöstes Wasserglas und Kieselsol.

2. Grundierung oder Putzmörtel oder Farbe nach Anspruch 1, **dadurch gekennzeichnet, dass**
der pH-Wert größer oder gleich 9,5, vorzugsweise größer oder gleich 10,5 und besonders bevorzugt größer oder gleich 11,0 ist.

3. Grundierung oder Putzmörtel oder Farbe nach Anspruch 1 oder 2, **dadurch gekennzeichnet, dass**
in Bezug auf die Grundierung oder die Farbe der Massenanteil an in Wasser gelöstem Silikat, bestehend aus oder umfassend in Wasser gelöstes Wasserglas oder in Wasser gelöstes Wasserglas und Kieselsol, bezogen auf das Gesamtgewicht der Zusammensetzung, im Bereich von 0,01 bis 3 Gew.-%, bevorzugt im Bereich von 0,05 bis 2,5 Ges.-% und insbesondere im Bereich von 0,1 bis 2 Gew.-%, liegt und dass
in Bezug auf den Putzmörtel der Massenanteil an in Wasser gelöstem Silikat, bestehend aus oder umfassend in Wasser gelöstes Wasserglas oder in Wasser gelöstes Wasserglas und Kieselsol, bezogen auf das Gesamtgewicht der Zusammensetzung, im Bereich von 0,01 bis 2 Gew.-% und bevorzugt im Bereich von 0,1 bis 2 Gew.-% liegt.

4. Grundierung oder Farbe nach einem der vorangehenden Ansprüche,
**dadurch gekennzeichnet, dass**
der Massenanteil an in Wasser dispergiertem oder dispergierbarem organischen Bindemittel um mindestens das zwei- oder dreifache größer ist, als der Massenanteil an in Wasser gelöstem Silikat, bestehend aus oder umfassend in Wasser gelöstes Wasserglas oder in Wasser gelöstes Wasserglas und Kieselsol.

5. Grundierung oder Putzmörtel oder Farbe nach einem der vorangehenden Ansprüche, **dadurch gekennzeichnet, dass**
der Massenanteil an in Wasser dispergiertem oder dispergierbarem organischen Bindemittel, bezogen auf das Gesamtgewicht der Zusammensetzung, im Bereich von 0,002 bis 30 Gew.-%, bevorzugt im Bereich von 0,02 bis 25 Ges.-%, besonders bevorzugt im Bereich von 0,1 bis 20 Gew.-% und insbesondere im Bereich von 0,2 bis 15 Gew.-%, liegt.

6. Grundierung oder Putzmörtel oder Farbe nach einem der vorangehenden Ansprüche, **dadurch gekennzeichnet, dass**
das Wasserglas Natriumwasserglas, Lithiumwasserglas und/oder Kaliumwasserglas oder eine beliebige Mischung hiervon, insbesondere Kaliumwasserglas, darstellt.

7. Grundierung oder Putzmörtel oder Farbe nach einem der vorangehenden Ansprüche, **dadurch gekennzeichnet, dass**
das organische Bindemittel sphärische Kunststoffpartikel mit einem durchschnittlichen Durchmesser kleiner 2 µm umfasst, insbesondere enthaltend oder gebildet aus mindestens einem Acrylat-, Styrol-, insbesondere Styrolacrylat-, Vinylacetat-, Vinylpropionat- und/oder Polyurethanhomo- und/odercopolymeren oder einer beliebigen Mischung hiervon.

8. Grundierung oder Putzmörtel oder Farbe nach einem der vorangehenden Ansprüche, ferner umfassend
Sand, insbesondere Quarzsand und/oder Quarzmehl, und/oder mindestens eine Putzkörnung und/oder mindestens ein Pigment.

9. Grundierung oder Putzmörtel oder Farbe nach einem der vorangehenden Ansprüche, ferner umfassend
weitere Füllstoffe und/oder Additive und/oder mindestens ein organisches oder anorganisches Fasermaterial oder deren Mischungen.

10. Grundierung oder Putzmörtel nach einem der vorangehenden Ansprüche, ferner umfassend
eine wässrige Silikonharzlösung, insbesondere enthaltend Kaliummethylsiliconat.

11. Putzmörtel nach einem der vorangehenden Ansprüche, enthaltend 10 - 36 Gew.-%, bevorzugt 1 - 25 Gew.-%, Wasser,
0 - 10 Gew.-%, bevorzugt 1,5 - 5 Ges.-%, Pigment,
40 - 89,8 Gew.-%, bevorzugt 46,5 - 81, 8 Gew.-%, Füllstoffe,
0-10 Gew.-%, bevorzugt 0,5 - 5 Ges.-%, Fasern,
0- 10, Gew.-% bevorzugt 0,1 - 5 Gew.-%, Wachspräparation,
0,1 - 10 Gew.%, bevorzugt 0,5 - 6 Ges.-%. Bindemitteldispersion,
0,1 - 4 Gew.-%, bevorzugt 0,5 - 2,5 Gew.-%, Wasserglas und
0 - 10 Gew.-%, bevorzugt 0,1 - 5 Gew.-%. Additiv.

12. Verfahren zur Herstellung einer Grundierung, eines Putzmörtels oder einer Farbe gemäß einem der Ansprüche 1 bis 11, umfassend die Schritte
a) Zurverfügungstellung von in Wasser gelöstem Silikat, bestehend aus oder umfassend in Wasser gelöstes Wasserglas oder in Wasser gelöstes Wasserglas und Kieselsol, vorzugsweise Kaliumwasserglas, vorzugsweise als 15 bis 40 gew.-%ige, insbesondere 20 bis 35 gew.-%ige, wässrige Lösung von Silikat, bestehend aus oder umfassend in Wasser gelöstes Wasserglas oder in Wasser gelöstes Wasserglas und Kieselsol,
b) Zurverfügungstellung von in Wasser dispergiertem oder dispergierbarem organischen Bindemittel in Form von Kunststoffpartikeln oder -kugeln mit einem durchschnittlichen Durchmesser kleiner 3 µm, bevorzugt kleiner 2 µm,
c) Vermischen der in Schritt a) und b) erhaltenen Lösung bzw. Dispersion und
d) Einstellen des pH-Wertes der Zusammensetzung auf einen basischen Wert, insbesondere größer oder gleich 9,5.

13. Verfahren nach Anspruch 12, **dadurch gekennzeichnet, dass** das in Wasser dispergierte oder dispergierbare organische Bindemittel eine 30 bis 75 gew.-%ige, insbesondere 40 bis 65 gew.-%ige, wässrige Bindemitteldispersion darstellt.

## Claims

1. Primer, containing water, for the treatment of areas obtained by gypsum plaster trowel application, gypsum plaster smooth finish, or gypsum plaster coating, comprising
at least one silicate dissolved in water, consisting of or comprising at least one water glass dissolved in water, or at least one water glass and silica sol dissolved in water, and
at least one organic binder agent, dispersed or dispersible in water,
wherein the pH value of this composition is alkaline,
wherein the mass proportion of silicate dissolved in water, consisting of or comprising water glass dissolved in water or water glass and silica sol dissolved in water, related to the total weight of the composition, lies in the range from 0.001 to 3.5 % by weight, wherein the mass proportion of the organic binder agent dispersed or dispersible in water is greater than the mass proportion of silicate dissolved in water, consisting of or comprising water glass dissolved in water or water glass and silica sol dissolved in water, and
wherein the organic binder agent comprises polymer particles with an average diameter of less than 3 µm,
wherein the primer contains
22 to 40 % by weight water,
1.5 to 5 % by weight pigment,
27.5 to 74.9 % by weight filler substances,
0.1 to 5 % by weight wax preparation,
0.5 to 15 % by weight binder agent dispersion,
0.5 to 2.5 % by weight water glass and
0.5 to 5 % by weight additive;
or
paint, containing water, for the treatment of areas obtained by gypsum plaster trowel application, gypsum plaster smooth finish, or gypsum plaster coating, comprising at least one silicate dissolved in water, at least one water glass dissolved in water, or at least one water glass and silica sol dissolved in water, and
at least one organic binder agent, dispersed or dispersible in water,
an aqueous silicone resin solution, containing potassium methyl siliconate wherein the pH value of this composition is alkaline,
wherein the mass proportion of silicate dissolved in water, consisting of or comprising water glass dissolved in water or water glass and silica sol dissolved in water, related to the total weight of the composition, lies in the range from 0.001 to 3.5 % by weight, the mass proportion of the organic binder agent dispersed or dispersible in water is greater than the mass proportion of silicate dissolved in water, consisting of or comprising water glass dissolved in water or water glass and silica sol dissolved in water, and
wherein the organic binder agent comprises polymer particles with an average diameter of less than 3 µm,
wherein the paint contains
20 - 70 % by weight water,
1.5 - 12 % by weight pigment,
27 - 51.5 % by weight filler,
0.5 - 10 % by weight binder agent dispersion,
0.5 - 2.5 % by weight water glass and
0.5 - 4 % by weight additive;
or
plaster mortar, containing water,
for the treatment of areas obtained by gypsum plaster trowel application, gypsum plaster smooth finish, or gypsum plaster coating, comprising at least one silicate dissolved in water, consisting of or comprising a water glass dissolved in water, or at least one water glass and silica sol dissolved in water, and
at least one organic binder agent, dispersed or dispersible in water,
wherein the organic binder agent comprises polymer particles with an average diameter of less than 3 µm, and
wherein the pH value of this composition is alkaline,
wherein the mass proportion of silicate dissolved in water, consisting of or comprising water glass dissolved in water or water glass and silica sol dissolved in water, related to the total weight of the composition, lies in the range from 0.001 to 2 % by weight, and
wherein the mass proportion of the organic binder agent, dispersed or dispersible in water, is at least three times greater than the mass proportion of silicate dissolved in water, consisting of or comprising water glass dissolved in water or water glass and silica sol dissolved in water.

2. Primer or plaster mortar or paint according to Claim 1, **characterized in that** the pH value is greater than or equal to 9.5, preferably greater than or equal to 10.5, and particularly preferably greater than or equal to 11.0.

3. Primer or plaster mortar or paint according to Claim 1 or 2, **characterized in that**, with regard to the primer or the paint, the mass proportion of the silicate dissolved in water, consisting of or comprising water glass dissolved in water or water glass and silica sol dissolved in water, related to the total weight of the composition, lies in the range from 0.01 to 3 % by weight, and preferably in the range from 0.05 to 2.5 % by weight, and in particular in the range from 0.1 to 2 % by weight, and that, with regard to the plaster mortar, the mass proportion of the silicate dissolved in water, consisting of or comprising water glass dissolved in water or water glass and silica sol dissolved in water, related to the total weight of the composition, lies in the range from 0.01 to 2% by weight, and preferably in the range from 0.1 to 2% by weight.

4. Primer or paint according to any one of the preceding claims, **characterized in that** the mass proportion of the organic binder agent dispersed or dispersible in water is at least two or three times greater than the mass proportion of silicate dissolved in water, consisting of or comprising water glass dissolved in water or water glass and silica sol dissolved in water.

5. Primer or plaster mortar or paint according to any one of the preceding claims, **characterized in that**
the mass proportion of organic binder agent dispersed or dispersible in water, related to the total weight of the composition, lies in the range from 0.002 to 30 % by weight, preferably in the range from 0.02 to 25 % by weight, particularly preferably in the range from 0.1 to 20 % by weight, and in particular in the range from 0.2 to 15 % by weight.

6. Primer or plaster mortar or paint according to any one of the preceding claims, **characterized in that**
the water glass represents sodium water glass, lithium water glass and/or potassium water glass or any desired mixture thereof, in particular potassium water glass.

7. Primer or plaster mortar or paint according to any one of the preceding claims, **characterized in that**
the organic binder agent comprises polymer particles with an average diameter of less than 2 µm, in particular containing or formed from at least one homopolymer and/or copolymer, namely acrylate, styrene, in particular styrene acrylate, vinyl acetate, vinyl propionate and/or polyurethane homopolymer and/or copolymer, or any desired mixture thereof.

8. Primer or plaster mortar or paint according to any one of the preceding claims, further comprising sand, in particular quartz sand and/or quartz powder, and/or at least one plaster granulation and/or at least one pigment.

9. Primer or plaster mortar or paint according to any one of the preceding claims, further comprising further filler and/or additives and/or at least one organic or inorganic fibre material or mixtures thereof.

10. Primer or plaster mortar according to any one of the preceding claims, further comprising an aqueous silicone resin solution, in particular containing potassium methyl siliconate.

11. Plaster mortar according to any one of the preceding claims, containing
10 - 36 % by weight, preferably 15 - 25 % by weight, water,
O - 10 % by weight, preferably 1.5 - 5 % by weight, pigment,
40 - 89.8 % by weight, preferably 46.5 - 81.8 % by weight, filler,
0 - 10 % by weight, preferably 0.5 - 5 % by weight, fibres,
0 - 10 % by weight preferably 0.1 - 5 % by weight, wax preparation,
0.1 - is % by weight, preferably 0.5 - 6 % by weight, binder agent dispersion,
0.1 - 4 % by weight, preferably 0.5 - 2.5 % by weight, water glass and
0 - 10 % by weight, preferably 0.1 - 5 % by weight, additive.

12. Method for producing a primer, a plaster mortar, or a paint in accordance with any one of Claims 1 to 11, comprising the steps:
a) provision of silicate dissolved in water, consisting of or comprising water glass dissolved in water or water glass and silica sol dissolved in water, preferably potassium water glass, preferably as 15 to 40 % by weight, in particular 20 to 35 % by weight, aqueous solution of silicate, consisting of or comprising water glass dissolved in water or water glass and silica sol dissolved in water,
b) provision of organic binder agent dispersed or dispersible in water, in form of polymer particles or spheres with an average diameter of less than 3 µm, and preferably less than 2 µm,
c) mixing of the solution or dispersion respectively contained in steps a) and b), and
d) adjusting the pH value of the composition to an alkaline value, in particular greater than or equal to 9.5.

13. Method according to Claim 12, **characterized in that** the organic binder agent dispersed or dispersible in water represents an aqueous binder agent dispersion of 30 to 75 % by weight, in particular 40 to 65 % by weight.

## Revendications

1. Apprêt, contenant de l'eau, pour le traitement de zones emplâtrées, dont le plâtre est retiré ou plâtrées, comprenant
au moins un silicate dissous dans de l'eau, se composant de ou comprenant au moins un verre soluble dissous dans de l'eau ou au moins un verre soluble et gel de silice dissous dans de l'eau, et
au moins un liant organique dispersé ou dispersable dans de l'eau,
la valeur de pH de cette composition étant basique,
la fraction massique de silicate dissous dans de l'eau, se composant de ou comprenant du verre soluble dissous dans de l'eau ou du verre soluble et gel de silice dissous dans de l'eau, rapporté au poids total de la composition, se trouvant dans la plage de 0,001 à 3,5 % massique,
la fraction massique de liant organique dispersé ou dispersable dans de l'eau étant supérieure à la fraction massique de silicate dissous dans de l'eau, se composant de ou comprenant du verre soluble dissous dans de l'eau ou du verre soluble et gel de silice dissous dans de l'eau, et
le liant organique comprenant des particules de matière synthétique avec un diamètre moyen inférieur à 3 µm,
l'apprêt contenant
de 22 à 40 % massique d'eau,
de 1,5 à 5 % massique de pigment,
de 27,5 à 74,9 % massique de charges,
de 0,1 à 5 % massique de préparation de cire,
de 0,5 à 15 % massique de liant à dispersion,
de 0,5 à 2,5 % massique de verre soluble, et
de 0,5 à 5 % massique d'additif ;
ou
peinture, contenant de l'eau, pour le traitement de zones emplâtrées, dont le plâtre est retiré ou plâtrées, comprenant
au moins un silicate dissous dans de l'eau, se composant de ou comprenant au moins un verre soluble dissous dans de l'eau ou au moins un verre soluble et gel de silice dissous dans de l'eau, et
au moins un liant organique dispersé ou dispersable dans de l'eau et
une solution de résine de silicone aqueuse, comprenant du méthylsiliconate de potassium,
la valeur de pH de cette composition étant basique,
la fraction massique de silicate dissous dans de l'eau, se composant de ou comprenant du verre soluble dissous dans de l'eau ou du verre soluble et gel de silice dissous dans de l'eau, rapporté au poids total de la composition, se trouvant dans la plage de 0,001 à 3,5 % massique,
la fraction massique de liant organique dispersé ou dispersable dans de l'eau étant supérieure à la fraction massique de silicate dissous dans de l'eau, se composant de ou comprenant du verre soluble dissous dans de l'eau ou du verre soluble et gel de silice dissous dans de l'eau, et
le liant organique comprenant des particules de matière synthétique avec un diamètre moyen inférieur à 3 µm,
la peinture comprenant
de 20 à 70 % massique d'eau,
de 1,5 à 12 % massique de pigment,
de 27 à 51,5 % massique de charges,
de 0,5 à 10 % massique de liant à dispersion,
de 0,5 à 2,5 % massique de verre soluble, et
de 0,5 à 4 % massique d'additif ;
ou
mortier d'enduit, contenant de l'eau,
pour le traitement de zones emplâtrées, dont le plâtre est retiré ou plâtrées, comprenant au moins un silicate dissous dans de l'eau, se composant de ou comprenant au moins un verre soluble dissous dans de l'eau ou au moins un verre soluble et gel de silice dissous dans de l'eau, et
au moins un liant organique dispersé ou dispersable dans de l'eau,
le liant organique comprenant des particules de matière synthétique avec un diamètre moyen inférieur à 3 µm, et
la valeur de pH de cette composition étant basique,
la fraction massique de silicate dissous dans de l'eau, se composant de ou comprenant du verre soluble dissous dans de l'eau ou du verre soluble et gel de silice dissous dans de l'eau, rapporté au poids total de la composition, se trouvant dans la plage de 0,001 à 2 % massique, et
la fraction massique de liant organique dispersé ou dispersable dans de l'eau étant au moins trois fois supérieure à la fraction massique de silicate dissous dans de l'eau, se composant de ou comprenant du verre soluble dissous dans de l'eau ou du verre soluble et gel de silice dissous dans de l'eau.

2. Apprêt ou mortier d'enduit ou peinture selon la revendication 1, **caractérisé en ce que**
la valeur de pH est supérieure ou égale à 9,5, de préférence supérieure ou égale à 10,5 et en particulier de préférence supérieure ou égale à 11,0.

3. Apprêt ou mortier d'enduit ou peinture selon la revendication 1 ou 2, **caractérisé en ce que**,
par rapport à l'apprêt ou à la peinture, la fraction massique de silicate dissous dans de l'eau, se composant de ou comprenant du verre soluble dissous dans de l'eau ou du verre soluble et gel de silice dissous dans de l'eau, rapporté au poids total de la composition, se trouve dans la plage de 0,01 à 3 % massique, de préférence dans la plage de 0,05 à 2,5 % massique et en particulier dans la plage de 0,1 à 2 % massique, et **en ce que**
par rapport au mortier d'enduit, la fraction massique de silicate dissous dans de l'eau, se composant de ou comprenant du verre soluble dissous dans de l'eau ou du verre soluble et gel de silice dissous dans de l'eau, rapporté au poids total de la composition, se trouve dans la plage de 0,01 à 2 % massique, et de préférence dans la plage de 0,1 à 2 % massique.

4. Apprêt ou peinture selon l'une quelconque des revendications précédentes, **caractérisé en ce que**
la fraction massique de liant organique dispersé ou dispersable dans de l'eau étant au moins deux fois ou trois fois supérieure à la fraction massique de silicate dissous dans de l'eau, se composant de ou comprenant du verre soluble dissous dans de l'eau ou du verre soluble et gel de silice dissous dans de l'eau.

5. Apprêt ou mortier d'enduit ou peinture selon l'une quelconque des revendications précédentes, **caractérisé en ce que**
la fraction massique de liant organique dispersé ou dispersable dans de l'eau, rapporté au poids total de la composition, se trouve dans la plage de 0,002 à 30 % massique, de préférence dans la plage de 0,02 à 25 % massique, en particulier de préférence dans la plage de 0,1 à 20 % massique et en particulier dans la plage de 0,2 à 15 % massique.

6. Apprêt ou mortier d'enduit ou peinture selon l'une quelconque des revendications précédentes, **caractérisé en ce que**
le verre soluble représente du verre soluble de sodium, du verre soluble de lithium et/ou du verre soluble de potassium ou un mélange quelconque de ceux-ci, en particulier du verre soluble de potassium.

7. Apprêt ou mortier d'enduit ou peinture selon l'une quelconque des revendications précédentes, **caractérisé en ce que**
le liant organique comprend des particules de matière synthétique sphériques avec un diamètre moyen inférieur à 2 µm, en particulier contenant ou formé en au moins un homopolymère et/ou copolymère d'acrylate, de styrène, en particulier de styrène-acrylate, d'acétate de vinyle, de propionate de vinyle et/ou de polyuréthane, ou d'un mélange quelconque de ceux-ci.

8. Apprêt ou mortier d'enduit ou peinture selon l'une quelconque des revendications précédentes, comprenant en outre
du sable, en particulier du sable siliceux et/ou de la poudre de quartz et/ou au moins un granulat d'enduit et/ou au moins un pigment.

9. Apprêt ou mortier d'enduit ou peinture selon l'une quelconque des revendications précédentes, comprenant en outre
d'autres charges et/ou additifs et/ou au moins un matériau fibreux organique ou inorganique, ou des mélanges de ceux-ci.

10. Apprêt ou mortier d'enduit selon l'une quelconque des revendications précédentes, comprenant en outre
une solution de résine de silicone aqueuse, en particulier comprenant du méthylsiliconate de potassium.

11. Mortier d'enduit selon l'une quelconque des revendications précédentes, comprenant de 10 à 36 % massique, de préférence de 15 à 25 % massique d'eau,
de 0 à 10 % massique, de préférence de 1,5 à % massique de pigment,
de 40 à 89,8 % massique, de préférence de 46,5 à 81,8 % massique de charges,
de 0 à 10 % massique, de préférence de 0,5 à 5 % massique de fibres,
de 0 à 10 % massique, de préférence de 0,1 à 5 % massique de préparation de cire, de 0,1 à 10 % massique, de préférence de 0,5 à 6 % massique de liant à dispersion,
de 0,1 à 4 % massique, de préférence de 0,5 à 2,5 % massique de verre soluble et
de 0 à 10 % massique, de préférence de 0,1 à 5 % massique d'additif.

12. Procédé pour la fabrication d'un apprêt, d'un mortier d'enduit ou d'une peinture selon l'une quelconque des revendications 1 à 11, comprenant les étapes de :
a) mise à disposition de silicate dissous dans de l'eau, se composant ou comprenant du verre soluble dissous dans de l'eau ou du verre soluble et gel de silice dissous dans de l'eau, de préférence du verre soluble de potassium, de préférence comme solution aqueuse de silicate de 15 à 40 % massique, en particulier de 20 à 35 % massique de silicate, se composant de ou comprenant du verre soluble dissous dans de l'eau ou du verre soluble et gel de silice dissous dans de l'eau,
b) mise à disposition de liant organique dispersé ou dispersable dans de l'eau, sous la forme de particules ou de billes de matière synthétique avec un diamètre moyen inférieur à 3 µm, de préférence inférieur à 2 µm,
c) mélange de la solution ou dispersion contenue aux étapes a) et b), et
d) ajustage de la valeur de pH de la composition sur une valeur basique, en particulier supérieure ou égale à 9,5.

13. Procédé selon la revendication 12, **caractérisé en ce que** le liant organique dispersé ou dispersable dans de l'eau représente un liant à dispersion aqueux de 30 à 75 % massique, en particulier de 40 à 65 % massique.
